# EUROPEAN PATENT APPLICATION

(11) **EP 2 570 391 A2**
(43) Date of publication of application: **20.03.2013**
(21) Application number: 12196835.8
(22) Date of filing: 13.12.2011
(51) Int. Cl.: C03B 3/02

(54) **Tank furnace for melting glass material**

(30) Priority: 17.12.2010 IT VR20100242
(62) Divisional of application: 11193365.1
(71) Applicant: Tecnome' S.r.l., 37047 San Bonifacio (Verona) (IT)
(72) Inventor: Forti, Marco, 37047 San Bonifacio (VR) (IT)
(74) Representative: Ponchiroli, Simone

(57) **Abstract**

A tank furnace for melting material, comprising a containment tank (9), an upper vault (10) mounted on top of the containment tank (9), thus together with the containment tank creating a first chamber (6), an infeed section (17) for infeed of the material (10) to be melted into the first chamber (6) and at least one magazine for the material (4) to be melted, the magazine being coupled to the infeed section (17), means for heating using combustion which are associated with the first chamber (6) and at least one distributor (65) for the air interposed between the first chamber (6) and the magazine for putting them in fluid communication and allowing the passage of the combustion fumes from the first chamber (6) to the magazine without the need for them to pass through the infeed section (17), the air distributor (65) also comprising at least a fourth chamber (71) for completion of the combustion where means for introducing comburent air are mounted.

## Description

This invention relates to a tank furnace for melting material, of the type normally subsequently used for making materials such as glass, glass wool, rock wool, frits, etc.

Tank furnaces are furnaces which, as their name indicates, have a melting chamber the bottom of which consists of a containment tank for the molten material. In particular, they are furnaces for continuous production, since in the tank there are, at a predetermined distance from each other, a zone for loading material to be melted and a zone for unloading the molten material.

In tank furnaces the material is heated by heating means using combustion which are mounted directly in the melting chamber, above the bath to be melted.

At present, in most applications, tank furnaces are fed with the material to be melted in powdered form. In particular, the cold material is gradually thrown in small quantities onto the bath where it floats until it melts.

In contrast, in other solutions material previously pressed to form briquettes or crushed material may be used. Even the latter are normally fed to a lateral zone of the furnace.

In most prior art applications, the fumes from combustion are used to pre-heat the comburent air.

In terms of patents, several solutions have been proposed which also involve pre-heating of the material (see for example US 2597585, US 2057393, US 4877449, US 3944713, US 5057140, EP 547576, US 4940478, US 2009084140, US 4797092, DE 4007115, US 4323384, JP 4310523, JP 60221327, DE 4039608 and DE 4000358). However, such solutions have not spread at industrial level.

However, the prior art technology has many disadvantages.

A first disadvantage is the fact that the productivity of prior art tank furnaces, which is measured as the ratio of furnace production capacity (weight/time) and the plan view extension of the furnace itself, is very poor, for various reasons.

A further disadvantage of prior art furnaces is the fact that in them it is very difficult to suitably degas the melting bath. In fact, degassing requires the molten material to move as much as possible so as to facilitate the rise of air bubbles, especially the smaller ones, whilst in prior art tank furnaces the melting bath is practically stationary.

It should also be noticed that in some applications such as the production of rock wool, in tank furnaces combustion must take place with a shortage of air, the consequence being that the fumes contain residues of unburnt fuel. As a result, on one hand there is a reduction in plant efficiency, and other the other hand pollutants are produced.

At present, to try to increase tank furnace efficiency, they are preferably made with large dimensions, having productivity that is much higher than that of the downstream plants which use the molten material (for example, for making bottles). Consequently, each tank furnace is connected to many downstream plants arranged in parallel. That solution, although allowing an increase in furnace efficiency, has the disadvantage of requiring long paths for transferring the molten material to the individual downstream plants, with consequent high fuel consumption to compensate for the heat loss along said paths.

In this situation the technical purpose which forms the basis of this invention is to provide a tank furnace for melting material which overcomes the above-mentioned disadvantages.

The technical purpose specified and the aims indicated are substantially achieved by a tank furnace for melting material made as described in the appended claims and/or in the description below. Further features and the advantages of this invention are more apparent in the detailed description, with reference to the accompanying drawings which illustrate several preferred, nonlimiting embodiments of a tank furnace for melting material, in which:
- Figure 1 is a schematic axonometric three-quarter view of a first embodiment of a tank melting furnace according to this invention;
- Figure 2 is a partial cross-section of the furnace of Figure 1, showing the inner structure;
- Figure 3 is a front view of the furnace of Figure 1;
- Figure 4 is a side view of the furnace of Figure 1;
- Figure 5 is a cross-section of the furnace of Figure 4 according to the line V - V;
- Figure 6 shows the furnace of Figure 5, schematically illustrating the material to be melted inside it and the paths of the fumes from combustion;
- Figure 7 is a cross-section of the furnace of Figure 3 according to the line VII - VII;
- Figure 8 shows the furnace of Figure 7, schematically illustrating the material to be melted inside it and the paths of the fumes from combustion and of the comburent air;
- Figure 9 is a schematic axonometric view of a second embodiment of a tank melting furnace made according to this invention;
- Figure 10 is a longitudinal section of the furnace of Figure 9, with some parts cut away to better illustrate others;
- Figure 11 is a side view of the furnace of Figure 10, schematically illustrating the material inside it; and
- Figure 12 is a cross-section of the furnace of Figure 9 according to the line XII - XII from Figure 11.

With reference to the accompanying drawings the numeral 1 denotes in its entirety a tank melting furnace made in accordance with this invention.

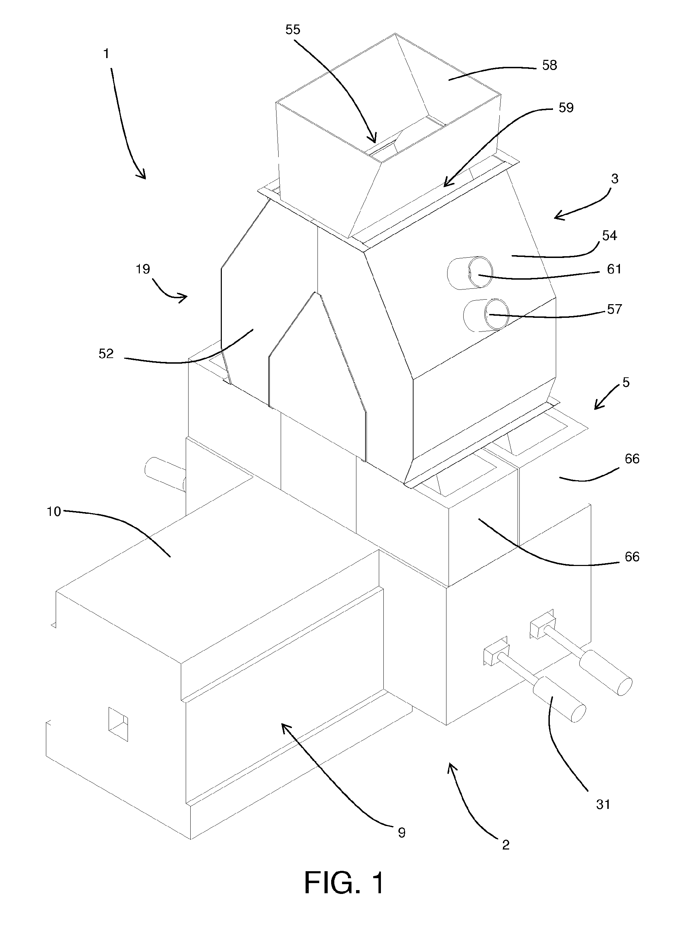

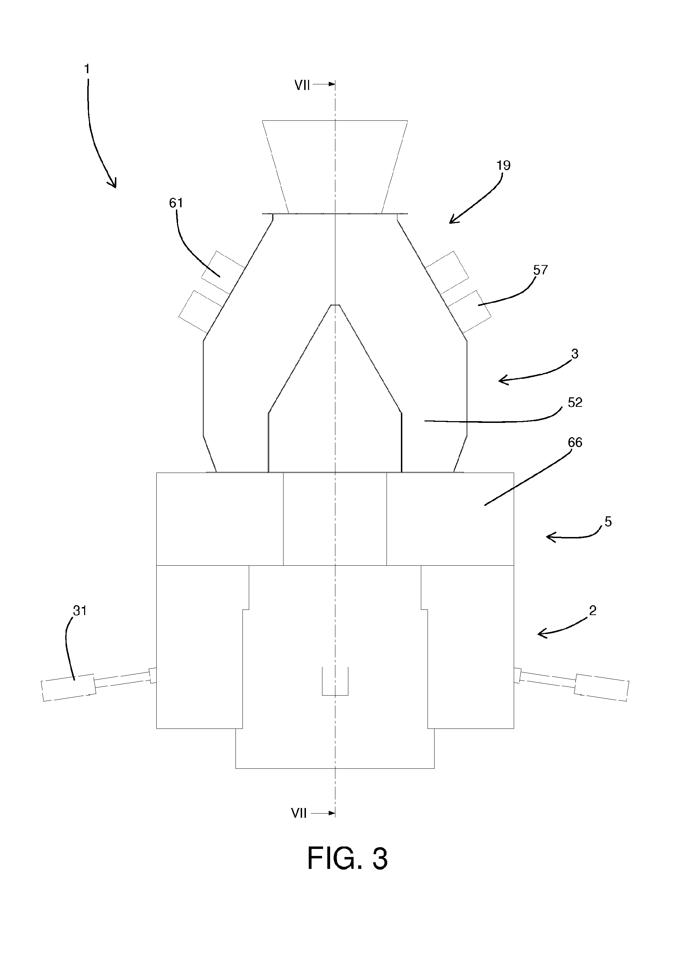

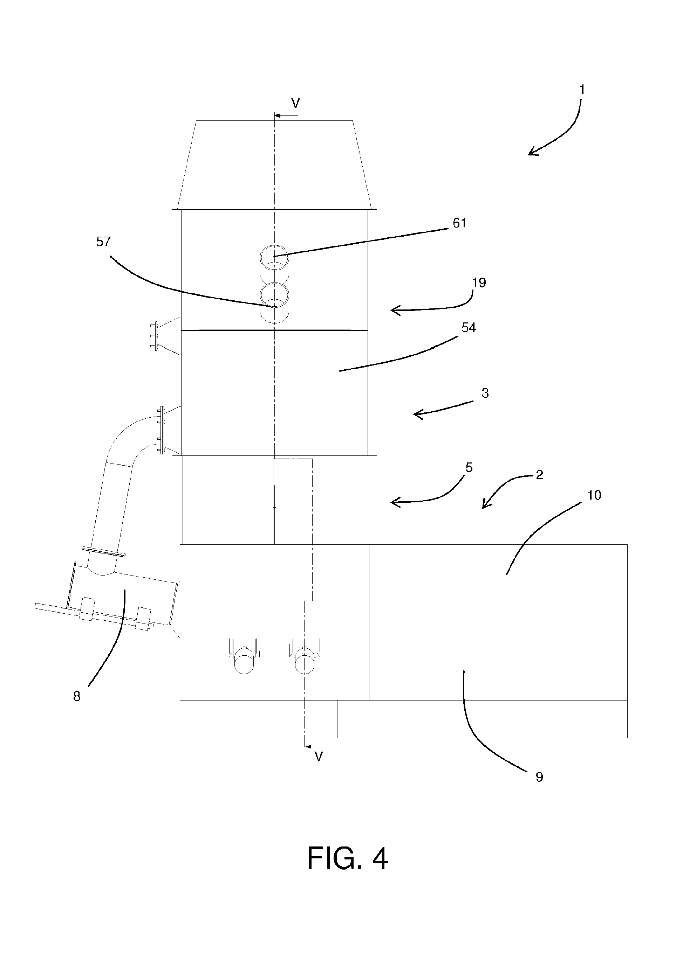

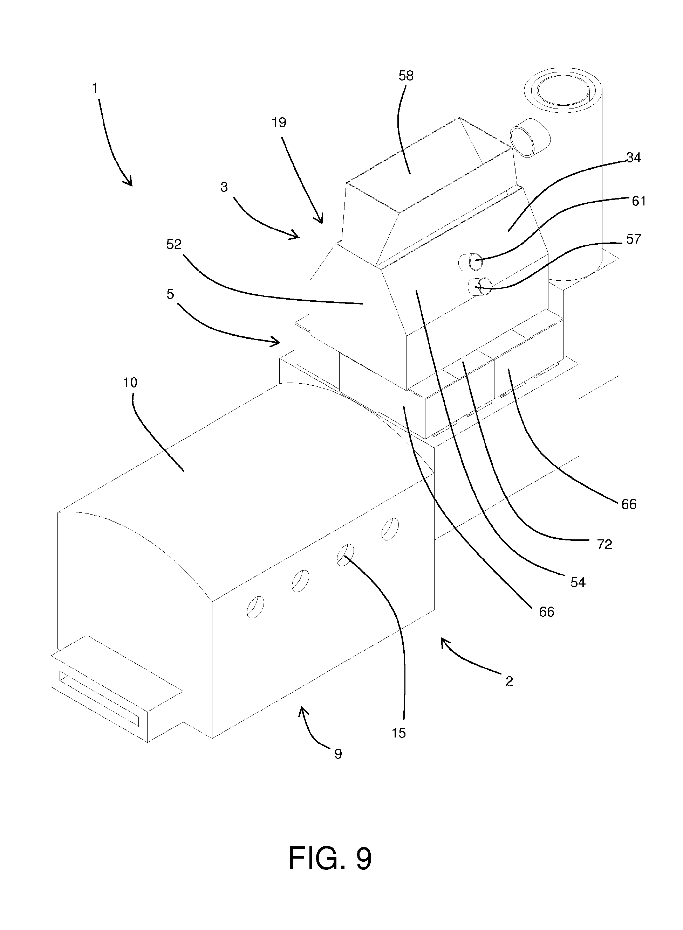

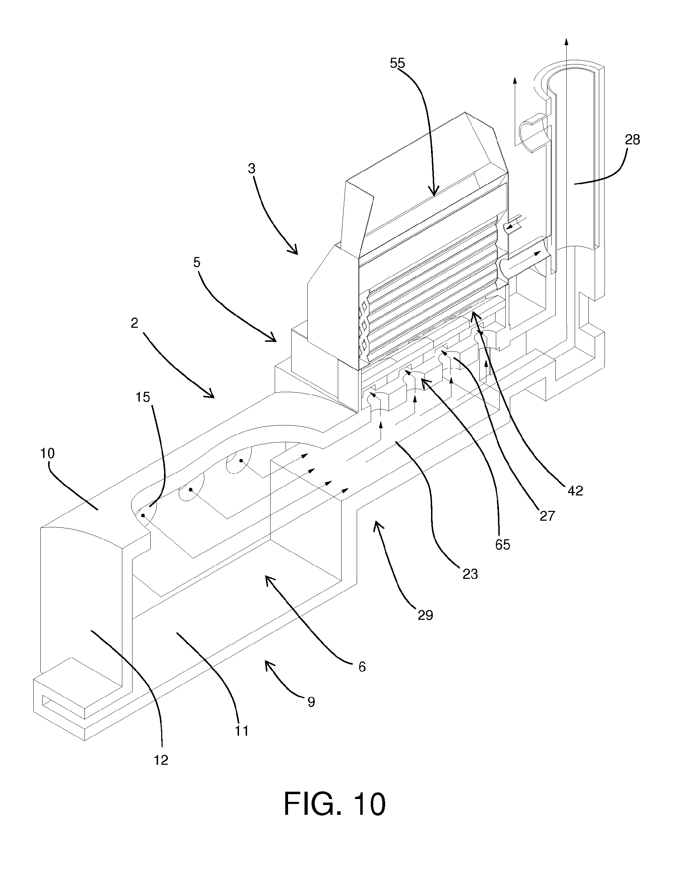

In particular, Figures 1 to 8 show a furnace 1 with small dimensions which advantageously may be used for example in combination with plants for the production of glass fibre, mineral fibres or frits, whilst Figures 9 to 12 show a larger furnace 1 which in general can be used in combination with plants for the production of glass.

It should also be noticed that the furnaces illustrated are furnaces intended for melting material which is fed in the form of briquettes or crushed material. Despite that, many of their parts and features may also be used in furnaces intended for melting powdered material.

As shown in the accompanying drawings, in the furnaces illustrated three main parts can be identified: a lower part 2 in which the actual melting occurs, an upper part 3 for storage of the material 4 to be melted, and an intermediate part 5 which, as explained in more detail below, allows correct division of the fumes from combustion for their use in a pre-heating step. For clarity, the three parts are now described one after another in that order. In fact, this invention relates to each of the three parts independently. That means that the innovative aspects developed by this invention relative to each of the three parts of the furnace 1 may be applied irrespective of the presence or absence of the other two parts, and irrespective of their specific structure.

The lower part 2 of the furnace 1 first forms inside it a first chamber 6 in which the melting bath 7 is created and into which the material 4 to be melted is gradually introduced. Means for heating using combustion, normally comprising one or more burners 8, are associated with the first chamber 6. In more detail, the first chamber 6 is delimited by a lower containment tank 9 which, in practice, is designed to accommodate the bath 7 of molten material, and an upper vault 10 mounted above the tank 9. Considering the temperatures used, both the tank 9 and the vault 10 are advantageously made of refractory material 4.

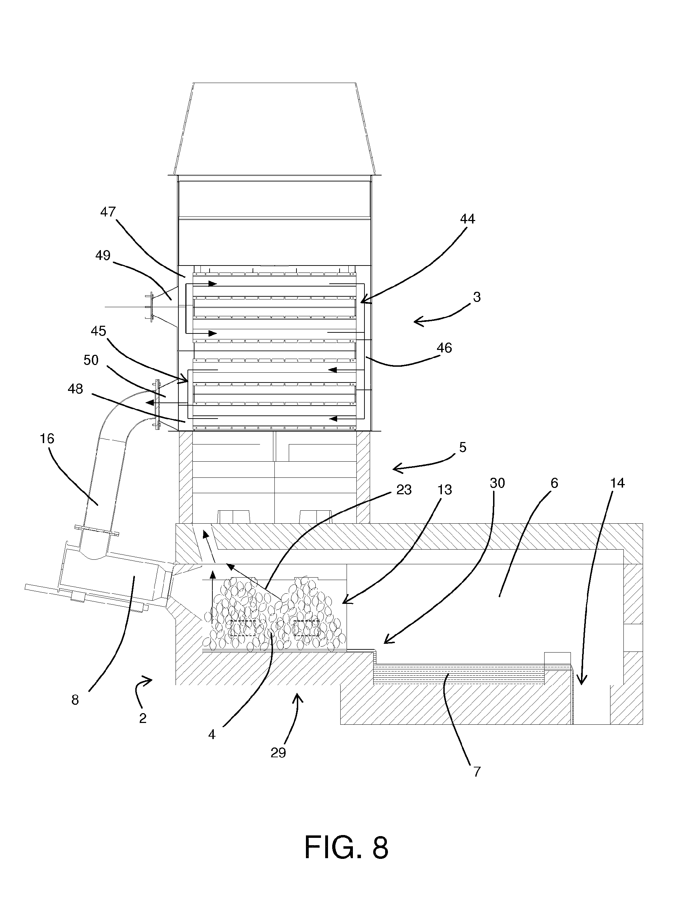

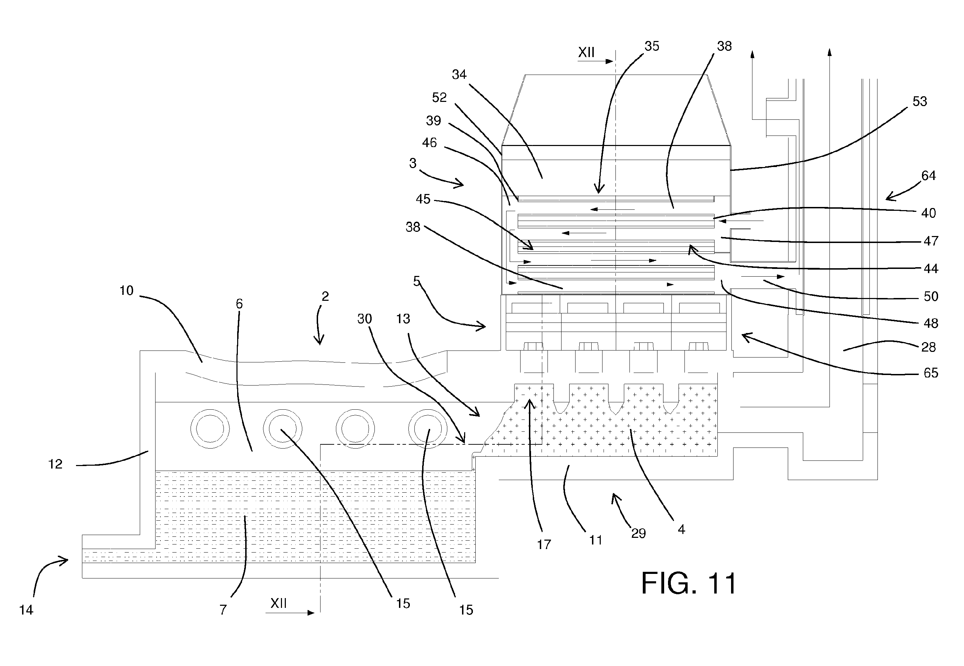

The containment tank 9 also usually comprises a base 11 and a perimetric wall 12. In it there is also a zone 13 for loading the material to be melted and a zone 14 for unloading the molten material. The loading zone 13 and the unloading zone 14 are advantageously positioned in such a way that they are spaced out, in particular preferably at opposite ends of the tank 9. The unloading zone 14 may be made in any known way either in the base 11 (Figure 8) or in the perimetric wall 12 of the tank 9 (Figure 11).

It should be noticed that, for the sake of simplicity, Figures 1 to 8 show a furnace 1 with small dimensions equipped with a single burner 8, whilst Figures 9 to 12 show a larger furnace 1 with eight burners 8 (of which only the corresponding mounting cavity 15 in the perimetric wall 12 is visible). Despite that, this invention may advantageously be applied in furnaces of any size which are equipped with any number of burners 8 or other heating means using combustion.

In general, the heating means using combustion are advantageously associated with means for supplying the fuel and the comburent air, of which, in the embodiments illustrated, only some parts of a plant 16 for conveying comburent air are shown, since they are otherwise of the known type.

Also associated with the first chamber 6 there are means for feeding the material 4 which are structured in such a way as to feed the material 4 into the tank 9 at the loading zone 13.

The first aspect characterising this invention, with reference to the lower part 2 of the furnace 1, is the fact that the means for feeding the material 4 (whether it is powdered or in briquettes or crushed material or in another form), comprise at least two infeed sections 17 for the material 4, each advantageously comprising one or more inlets 18 for the material 4 (in the preferred embodiment they are formed by the upper vault 10). The feed means also comprise at least one containment body 19 for the material 4 to be melted, which is coupled to each infeed section 17 (however, there may be a single containment body 19 for all of the infeed sections 17 or more than one) for feeding the material 4 to be melted to them. It should also be noticed that in the embodiment in Figures 1 to 8, each infeed section 17 comprises two inlets 18 formed by the vault 10, whilst in the embodiment in Figures 9 to 12 it comprises four.

The infeed sections 17 are spaced out and are positioned at a height such that they are substantially above the tank 9, that is to say, at least above the maximum height which can be reached by the melting bath 7 in the tank 9. In particular, the inlets 18 may be made either in the upper vault 10 (as in the embodiments illustrated) or in the perimetric wall 12 of the tank 9 at two substantially opposite lateral stretches 20 of it.

In fact, advantageously, the two infeed sections 17 are positioned at two substantially opposite lateral stretches 20 of the perimetric wall 12 of the tank 9, in such a way that during operation each infeed section 17 can create a stack 21 of material 4 in the tank 9 which is opposite the stack created by the other infeed section 17. In particular, the two stacks 21 must preferably be substantially facing one another and between them must delimit, in the first chamber 6, at least one free space 22.

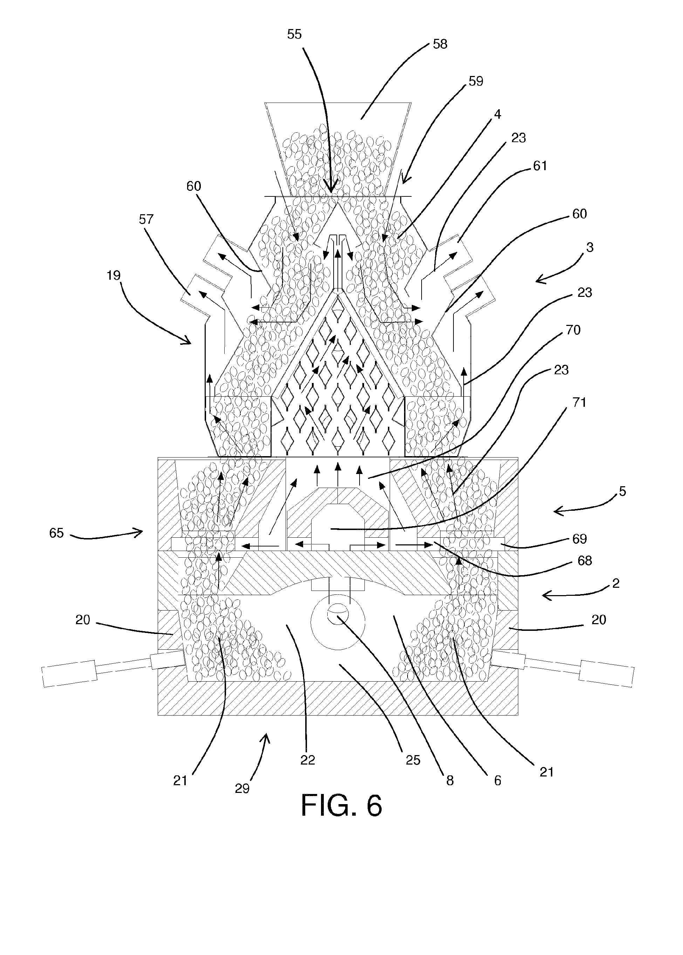

As shown in Figure 6, each stack 21 on one side is substantially leaning against the related lateral stretch 20 of the containment wall, and on the other side, for obvious physical reasons, is sloping. In the embodiment illustrated in Figures 1 to 8, one can see how the containment tank 9 in plan view is T-shaped with the two arms of the T corresponding to the zones where the two stacks 21 of material 4 build up. In contrast, in the case in Figures 9 to 12, the tank 9 has a rectangular plan. However, in both cases, between the two stacks 21 in the tank 9 there is a longitudinal free stretch where no material 4 builds up.

In any case, in the preferred embodiment the infeed sections 17 are made in the vault 10 in such a way that the stacks 21 cover the entire inner height of the first chamber 6. In fact, in that way, at the stacks 21 it is possible to minimise direct heat loss towards the outside, since practically all of the heat irradiated laterally by the fumes or the flame in the free space 22, is absorbed by the two stacks 21 of material 4 (given the temperatures involved, irradiation is the main method of heat transmission).

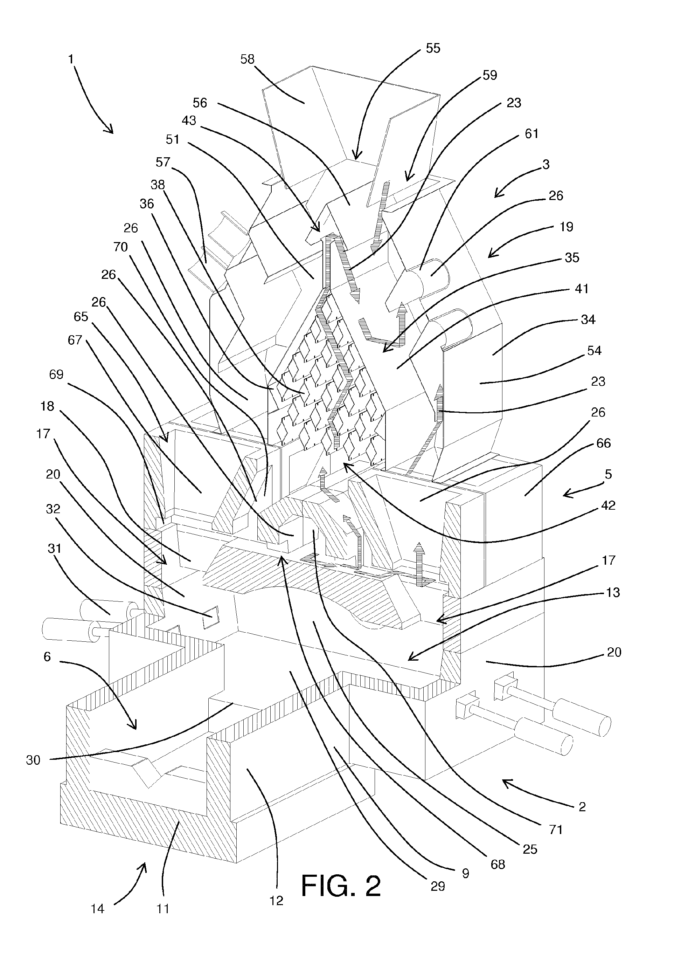

The second aspect characterising this invention, again with reference to the lower part 2 of the furnace 1, is the fact that the free space 22 which in practice remains between the two stacks 21, must be occupied by a heat source able to heat and advantageously melt the material 4 present on the two opposite surfaces of the two stacks 21. Therefore, in particular, depending on the embodiments, said free space 22 may form a stretch of a flow path for at least part of the fumes from combustion (indicated by the arrows in Figures 2, 6, 8, 10 and 12; the number 23 is used to label some of these arrows) and/or a zone for extension of a flame 24 created by the heating means. In particular, in the embodiment illustrated in Figures 1 to 8 both conditions arise, whilst in the embodiment in Figures 9 to 12, the heat source consists exclusively of the fumes from combustion, as is described in more detail below.

To obtain that result as regards the fumes, the loading zone 13 (in the embodiments illustrated that definition meaning the entire stretch of the containment tank 9 containing the two stacks 21 and lying between them) may, for example, be completely or partly interposed between the rest of the containment tank 9 and at least one exhaust flue, whose structure is described in more detail below. In fact, in this way, the part of the fumes from combustion directed towards the flue must pass through the free space 22. In the embodiment in Figures 9 to 12, the loading zone 13 is also interposed between the rest of the tank 9 and two flues.

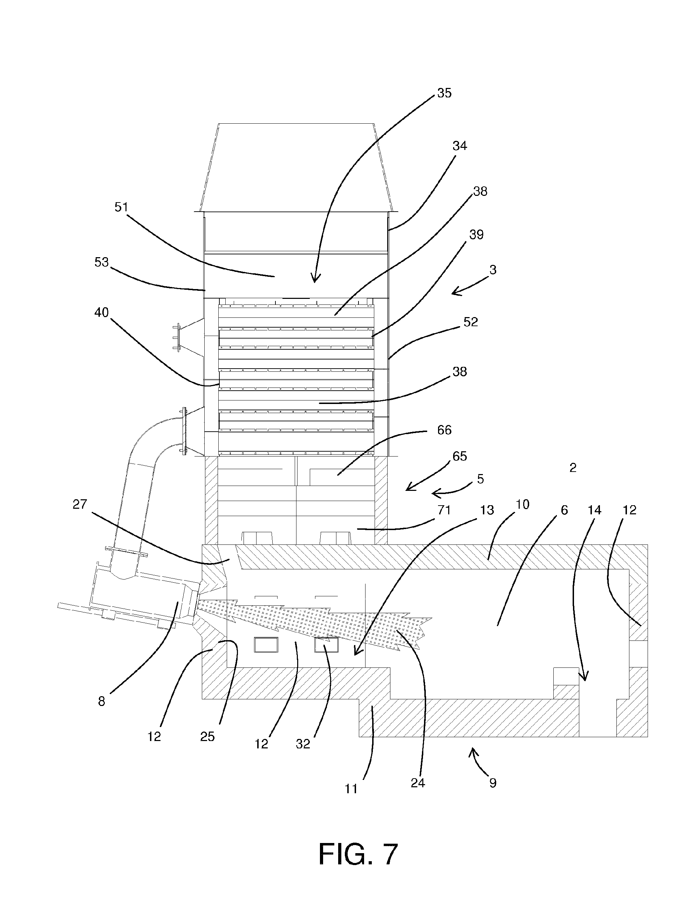

Alternatively, as shown in Figure 7, to have a flame 24 in the free space 22, the front of the loading zone 13, which is laterally delimited by the lateral stretches 20 of the perimetric wall 12 of the containment tank 9, may face the remaining part of the containment tank 9, and the rear may be closed by an end portion 25 of the perimetric wall 12, which is substantially transversal to the lateral stretches 20. Moreover, the heating means may comprise at least one burner 8 mounted on the end portion 25 and facing towards the free space 22, for extending the flame 24 in it.

As already indicated, in the embodiment illustrated in Figure 7, the free space 22 acts both as a zone for extension of the flame 24, and as a flow path for at least part of the fumes from combustion. A first flue 26 is connected to the first chamber 6 by means of a hole 27 made in the upper vault 10 at the point where it is connected to the end portion 25 of the perimetric wall 12. Even in the other embodiment illustrated, a first flue 26 is connected to the first chamber 6 at the upper vault 10, but this time through a plurality of holes 27 which are distributed longitudinally. However, in this second embodiment the rear of the free space 22 is also connected to a second flue 28.

Although in the preferred embodiment the two opposite stacks 21 are positioned facing one another and substantially parallel, in other embodiments they may even be opposite but not parallel, in such a way that they converge with each other (for example, seen from above, forming an open or closed V shape at the vertex). Or there may be a third infeed section 17 positioned transversally to the first two (for example at the end portion 25 of the perimetric wall 12, which, in that case, will preferably not be fitted with a burner 8, in such a way as to create a third stack 21 which joins the other two (in this way, seen from above, the three stacks 21 are arranged in a C shape C around the free space 22). However, further alternative arrangements are possible.

In the most simple embodiments of this invention, as regards the lower part 2 of the furnace 1, the base 11 of the tank 9 may extend completely on a single level.

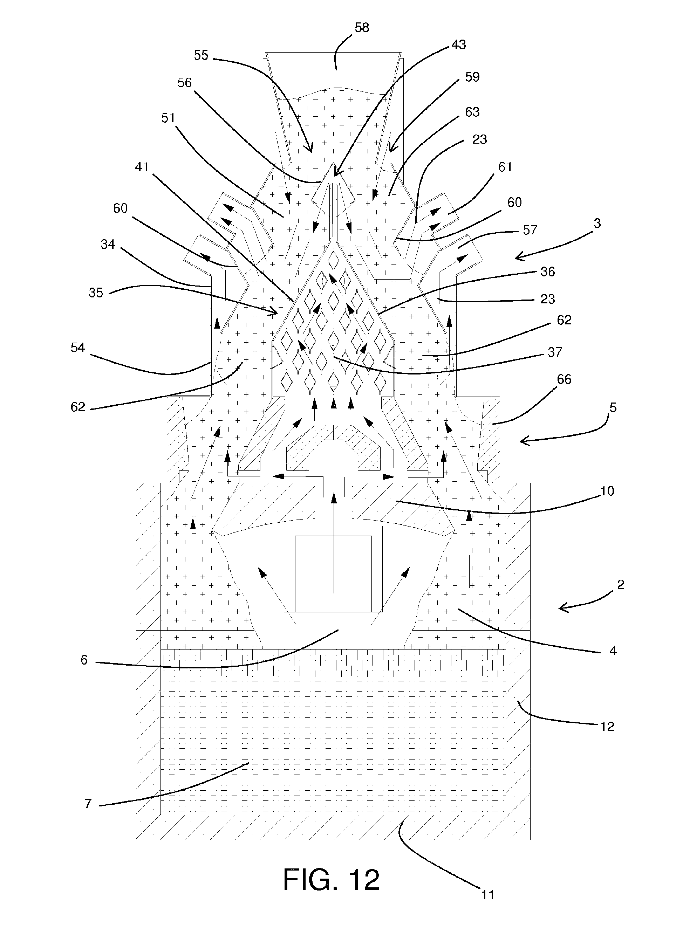

However, in the preferred embodiment, advantageously at the loading zone 13, the base 11 of the containment tank 9 comprises an area 29 which is raised relative to the rest of the base 11, in such a way that the stacks 21 of material 4 are immersed in a bath 7 with reduced or practically null level. Indeed, even more advantageously, the raised area 29 is located at a height which is higher than the maximum level which can be reached, during operation, by the bath 7 in the remaining part of the containment tank 9 (Figures 8 and 12). In fact, in this way, the stacks 21 of material 4 are outside the bath 7 and, as regards the molten material, they are affected exclusively by that which gradually melts. Consequently, on one hand the entire surface of the stacks 21 facing towards the free space 22 is subject to direct heating by the flame 24 and/or the fumes, and on the other hand there is no risk that the melting bath 7 can cause erosions of the slopes or, consequently, that any solid blocks may be drawn into the bath 7.

Depending on requirements, the raised area 29 of the base 11 may be horizontal or slightly angled in such a way as to facilitate the flow of molten material towards the lower part of the base 11.

As shown in Figure 8 or 12, between the raised area 29 and the rest of the base 11 there may be a separator step 30. However, in other embodiments, the passage from the raised area 29 to the rest of the base 11 may even occur by means of a gradual change in level or with two or more steps. However, advantageously, the presence of a movement path between the material 4 melting zone and the actual melting bath 7 may have beneficial effects in terms of degassing the molten material.

Finally, in the preferred embodiment of the lower part 2 of the furnace 1, at each lateral stretch 20 of the perimetric wall 12, there may be at least one thrust element (two in Figures 1 to 8) which can be activated to shift the material 4 in the related stack 21 and so facilitate the infeed of new material 4 from the related infeed section 17. Each thrust element advantageously comprises a linear actuator 31 whose head 32 can move between a position in which it is coplanar with the surface of the lateral stretches 20 of the perimetric wall 12, and a position in which it projects from it into the first chamber 6.

Moving on to the upper part 3 of the furnace 1, first it should be remembered that the related innovative aspects may be applied independently of the structure of the lower part 2 and the intermediate part 5. In particular, although in the embodiments illustrated the upper part 3 is associated with a lower part 2 made in such a way as to create at least two stacks 21 of material 4, according to the most general embodiment of this invention, the structure of the upper part 3 of the furnace 1 may advantageously be applied even in the case of furnaces with a single infeed section 17 (and consequently a single stack 21 of material 4) and furnaces in which the material 4 is inserted in the first chamber 6 using other methods.

In fact, as regards the upper part 3 of the furnace 1, this invention comprises first the presence of means for recovering at least part of the fumes produced by combustion with the aim of pre-heating both the material 4 to be melted and the comburent air. Said recovery means comprise at least one exhauster 33 associated with at least the first flue 26 which, as indicated, is in turn in fluid communication with the first chamber 6.

In more detail, according to this invention as regards the upper part 3 of the furnace 1, the containment body 19 comprises an outer containment structure 34 and at least a first air - air heat exchanger 35 which is at least partly inserted in the outer containment structure 34 according to the methods explained in more detail below.

The first heat exchanger 35 is made in such a way as to form a first flow path for a first fluid and at least a second flow path for a second fluid, the two flow paths being linked by heat exchange. The first flow path forms part of the first flue 26 and the second flow path forms part of the plant 16 for conveying comburent air to the heating means which use combustion.

In the embodiment illustrated, the first heat exchanger 35 comprises an inner containment structure 36 creating a compartment 37 which forms the first flow path, in which a plurality of pipes 38 is mounted which form the second flow path. In more detail, the inner containment structure 36 comprises a first front vertical wall 39 and a first rear vertical wall 40 through which the pipes 38 are mounted in a sealed fashion, and two first shaped lateral walls 41 having a vertical lower stretch and an upper stretch which is angled towards the other wall. In contrast, the inner containment structure 36 is open at the bottom and the top in such a way as to form respectively a lower end 42 and an upper end 43 of the first flow path. The lower end 42 is in fluid communication with the first chamber 6 and comprises a transit cross-section which is significantly greater than that of the upper end 43.

Advantageously, the various pipes 38 are connected to each other in series and/or in parallel and are arranged transversally to the first flow path (they are horizontal in the accompanying drawings). In particular, in the preferred embodiment, the pipes 38 are divided into two groups, an upper group 44 and a lower group 45. All of the pipes 38 of each group are connected in parallel, whilst the pipes 38 of the two groups are travelled through in opposite directions.

For that purpose, between the first front vertical wall 39 and the outer containment structure 34 there is an inversion chamber 46 in which all of the pipes 38 converge, allowing the air coming out of the upper group 44 to enter the lower group 45, whilst between the first rear vertical wall 40 and the outer containment structure 34 there is an infeed chamber 47 in communication with the pipes 38 of the upper group 44, and an outfeed chamber 48, separate from the infeed chamber 47, in which the pipes 38 of the lower group 45 converge. Connected to the infeed chamber 47 there is an infeed coupling 49 which in practice is fed with the cold comburent air, whilst connected to the outfeed chamber 48 there is an outfeed coupling 50 connected directly (as in Figure 7) or indirectly (as in Figure 11) to the heating means which use combustion. In this way, the cold air which flows through the pipes 38 of the upper group 44 is heated by cooler fumes which have already transferred part of their heat to the pipes 38 of the lower group 45 in which air that is already partly heated flows. The first heat exchanger 35 illustrated is therefore substantially a counterflow heat exchanger.

Also, according to this invention, between the outer containment structure 34 and the first heat exchanger 35 there is a second chamber 51 which is in communication with the infeed section 17 and designed to form a magazine for receiving the material 4 to be melted. Also according to this invention, the second chamber 51 at least partly surrounds the first heat exchanger 35 for recovering heat dispersed from it. Moreover, the second chamber 51 is also part of the first flue 26 for the fumes, being in fluid communication with both the exhauster 33 and with the first chamber 6.

In the embodiment illustrated, in particular, the second chamber 51 surrounds the first heat exchanger 35 at the top and on two opposite sides, the other two sides of the first heat exchanger 35 being substantially formed by the outer containment structure 34 (as already seen relative to the infeed chamber 47, the outfeed chamber 48 and the inversion chamber 46). Moreover, both the first heat exchanger 35 and the outer containment structure 34 are inferiorly coupled to the first chamber 6. In more detail, the outer containment structure 34 in turn comprises a second front vertical wall 52 and a second rear vertical wall 53 (which also delimit towards the outside the infeed chamber 47, the outfeed chamber 48 and the inversion chamber 46), and two convex lateral walls 54 which converge towards an upper opening 55 for insertion of the material 4. Depending on requirements, the upper opening 55 may be always open, closable with suitable movable means (preferably in a sealed fashion so as to prevent the accidental entry of cold air in the second chamber 51) or equipped with metering means for the material 4 to be melted.

Returning to the first heat exchanger 35, in the preferred embodiment, the first flow path is advantageously in fluid communication on one side with the first chamber 6, and on the other side with the second chamber 51. In fact, the upper end 43 advantageously opens into the upper part of the second chamber 51; to prevent the material 4 from entering the first heat exchanger 35, moreover, the upper end 43 is protected by a first flange 56, having an inverted V-shaped cross-section, which is mounted in the first chamber 6. In this way the exhauster 33, which is in fluid communication with the second chamber 51, can suck the fumes from the first chamber 6 either making them pass in series through the first heat exchanger 35 and the second chamber 51, or making them pass through only the second chamber 51. That is to say, there are two parallel paths for discharging fumes in the first flue 26. However, in other embodiments the upper end 43 of the first heat exchanger 35 may also be connected to the exhauster 33 not through the second chamber 51.

In more detail, to put the second chamber 51 in communication with the exhauster 33, the first flue 26 comprises one or more outlets 57, 61 from the second chamber 51. If the upper opening 55 in the second chamber 51 is always open and therefore allows easy entry of cold air from outside, then each outlet 57 should be positioned at a distance from the upper opening 55 such that, when the second chamber 51 is full of material 4, the pressure losses are lower along a path which, through the material 4 and/or the first heat exchanger 35, joins the outlet 57 to the first chamber 6 than a path joining that same outlet 57 to the upper opening 55. In fact, in this way, following the action of the exhauster 33 what is sucked out is mainly only hot fumes and not cold air. To maintain that effect as time passes it is also appropriate that during operation the level of material 4 in the second chamber 51 is always kept above a predetermined minimum level (therefore, the level should preferably be kept practically stable by means of practically continuous limited topping-up). In the embodiments illustrated that is achieved by applying a material loading hopper 58 to the central part of the upper opening 55 and operating in such a way as to always maintain a predetermined level of material 4 in the hopper. In fact, in this way as time passes it is possible to maintain constant the pressure losses caused by the path extending from the lateral portions 59 of the upper opening 55 to the outlets 57, 61.

In the preferred embodiments, all of the outlets 57, 61 are formed by a shaped second flange 60 which is fixed inside the outer containment structure 34 and extending downwards to prevent the material 4 from accidentally being inserted in them.

As shown in Figures 6 to 12, advantageously there is one or more first outlets 57 designed at least mainly for extracting fumes that have passed through only the second chamber 51, and one or more second outlets 61 designed at least mainly for extracting fumes which have passed in series through the first heat exchanger 35 and the second chamber 51. That result is achieved by positioning the second outlets 61 further from the infeed section 17 (higher up in the accompanying drawings) than the first outlets 57.

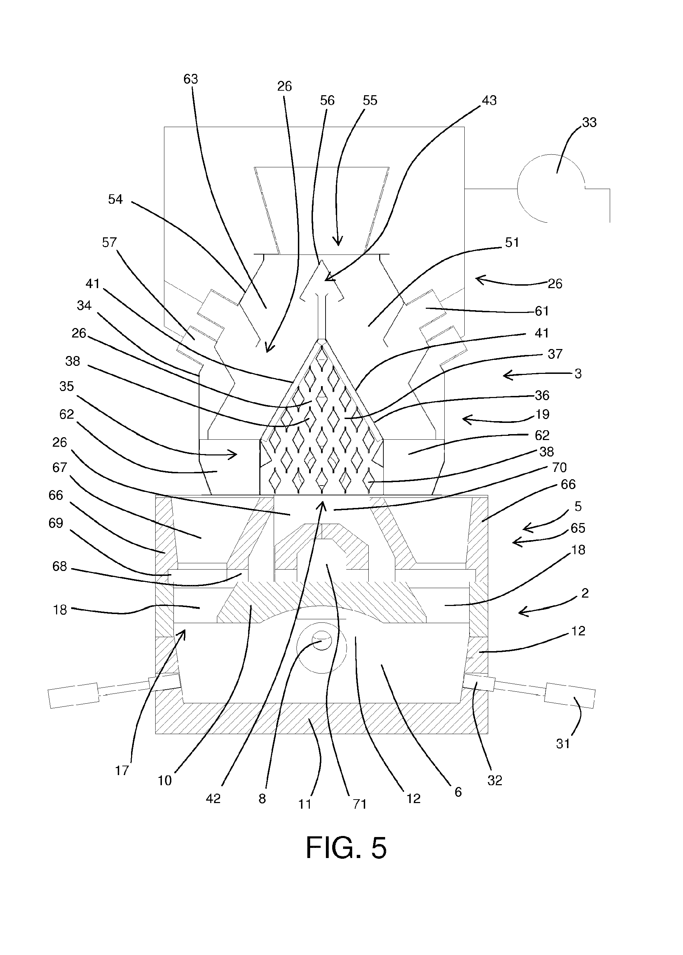

In the embodiment illustrated in which the furnace 1 has two infeed sections 17, there are two first outlets 57 and two second outlets 61 which are substantially specular. However, their number may vary depending on the application. Outside the outer containment structure 34 the first outlets 57 and the second outlets 61 of each side may converge in a single suction chamber. Moreover, advantageously, all of the outlets 57, 61 are connected to a single exhauster 33 (Figure 5). Therefore, if necessary, the exhauster 33 may be connected to only one of the two suction chambers.

To guarantee that the fumes can constantly gain access to the inside of the second chamber 51, there may advantageously be, in addition to the infeed sections 17, further passages which put in fluid communication the first chamber 6 and the second chamber 51. In fact, during operation, the infeed section 17 may be completely or partly blocked by the material 4 being melted. In the preferred embodiment, said passages are obtained using means for distribution of the fumes which are such that they divide the fumes between the second chamber 51 and the first flow path of the first heat exchanger 35. The structure of said preferred distribution means is described in more detail relative to the intermediate part 5 of the furnace 1 according to this invention.

In the embodiment illustrated, where the feed means comprise at least two infeed sections 17 for the material 4 which are located on two separate sides of the lower end 42 of the first flow path of the first heat exchanger 35, in the second chamber 51 there are two lower branches 62 which are separate from each other, extending downwards from an upper connecting portion 63 facing the upper opening 55. The branches 62 are positioned on two opposite sides of the first heat exchanger 35 and each in communication with one of the infeed sections 17 for feeding it with the material 4 to be melted. Finally, in the embodiment in Figures 9 to 12, as regards the part of the furnace 1 designed for pre-heating, the furnace 1 also comprises at least a second flue 28 for discharging a different part of the fumes (Figure 11). Moreover, the furnace 1 also comprises at least a second heat exchanger 64 of the known type (for example a coaxial parallel flow heat exchanger as shown in the accompanying drawings, or a refractory regenerative heat exchanger) mounted along the second flue 28 for further heating the comburent air coming out of the second path of the first heat exchanger 35. In fact, as shown, the air coming out of the outfeed coupling 50 of the first heat exchanger 35 is sent to the second heat exchanger 64; in turn, although not shown, the air coming out of the second heat exchanger 64 is sent to the furnace 1 heating means which use combustion.

The embodiments described in detail above relative to the upper part 3 of the furnace 1 are embodiments designed mainly for furnaces in which the material 4 is fed in the form of briquettes or crushed material. In fact, in that case, the fumes may pass through the material 4 without the need for special devices.

However, in its most general embodiment, it shall be understood that this invention, regarding the upper part 3 of the furnace 1, may also be applied in the case of powdered material 4. In fact, in that case, the passage of the fumes through the second chamber 51 may be obtained with other methods, for example by means of a plurality of tubes which pass through the second chamber 51 or other similar solutions.

Finally, moving on to the intermediate part 5 of the furnace 1, first it should be emphasised that again in this case the related innovative aspects may be applied independently of the structure of the lower part 2 and the upper part 3, and its presence is not essential either for the lower part 2 or for the upper part 3 described above. In particular, although in the embodiments illustrated the intermediate part 5 is associated with a lower part 2 made in such a way as to create at least two stacks 21 of material 4, and an upper part 3 for parallel pre-heating of the material 4 and the comburent air, in its most general embodiment the structure of the intermediate part 5 of the furnace 1 according to this invention may advantageously be applied even in the case of furnaces with a single infeed section 17 (and consequently a single stack 21 of material 4), or in furnaces in which the material 4 is inserted in the first chamber 6 using other methods, like in furnaces in which only the material 4 is pre-heated and not necessarily the air.

In fact, according to this invention the intermediate part 5 of the furnace 1 is mainly designed to allow the insertion of the fumes in the material 4 stored so at to pre-heat it, where the material 4 is in the form of briquettes or crushed material or has a particle size large enough for the purpose.

Therefore, in general, with reference to the intermediate part 5 of the furnace 1, this invention may be applied in any type of tank furnace 1 in which part of the fumes is made to pass through the material 4 contained in a magazine (for example the second chamber 51 in the embodiment illustrated) which at least partly forms part of the first flue 26 for discharging the fumes.

In fact, according to this invention the furnace 1 comprises at least one air distributor 65 directly associated with the infeed section 17 and interposed between the first chamber 6 and the magazine to put them in fluid communication by means of a passage which is separate from the material 4 infeed section 17. In fact, in this way, the air distributor 65 allows the passage of the combustion fumes from the first chamber 6 to the magazine without the need for them to pass through the infeed section 17, therefore avoiding possible blockage problems caused by melting of the material 4 at the infeed section 17. It should be noticed that, relative to the intermediate part 5 of the furnace 1, the definition infeed section 17 refers to any passage through which the material 4 can enter the first chamber 6, not necessarily an infeed section 17 of the type previously described with reference to the lower part 2 of the furnace 1.

In particular, in the preferred embodiment the distributor 65 comprises at least one tubular structure 66, its inside forming a first flow channel 67 for the material 4, the bottom of the channel being coupled to the infeed section 17. Advantageously the tubular structure 66 is in the form of a hopper. At least one duct extends through the tubular structure 66 from the outside as far as the first channel 67. Since the outside of the tubular structure 66 is in fluid communication with the first chamber 6, said duct can receive part of the fumes from the first chamber 6 and introduce them into the first channel 67.

In the embodiment illustrated, the duct comprises first at least a second channel 68 made through the tubular structure 66 and extending from the outside as far as the first channel 67. As shown in Figure 6, the second channel 68 may be formed by a recess made in the lower edge of the tubular structure 66 and coupled to the upper vault 10 which forms the infeed section 17.

Connected to the second channel 68 there is a groove 69 made in the tubular structure 66 at the first channel 67. The groove 69 extends at least partly around the first channel 67 itself, advantageously completely, as in the embodiments illustrated. Depending on the embodiments, the magazine may be formed either by an additional element placed above the tubular structure 66, such as the containment body 19 and the related second chamber 51 described above, or by the tubular structure 66 itself (and in particular the part of it above the groove 69 where the pre-heating fumes are introduced).

In the preferred embodiments, the distributor 65 comprises a plurality of tubular structures 66 which are positioned alongside each other for each infeed section 17 (advantageously one for each inlet 18). In fact, the total cross-section of the first channels 67 being equal, by increasing the number of tubular structures 66 it is possible to reduce the length of the grooves 69 and therefore render more uniform the distribution of the fumes around and inside each first channel 67.

In the case of the embodiment illustrated, in which the furnace 1 comprises two or more separate infeed sections 17, the distributor 65 is directly coupled to each of them.

If the furnace 1 also comprises a first heat exchanger 35 for pre-heating the comburent air, the distributor 65 also advantageously comprises a third chamber 70 for dividing the fumes which is in fluid communication on one side with the first chamber 6 and on the other side both with the magazine and with the first heat exchanger 35.

In the preferred embodiment, in particular, the third chamber 70 has a longitudinal direction of extension (perpendicular to the sheet in Figures 6 and 12); in turn the infeed sections 17 and the related tubular structures 66 are positioned symmetrically relative to a vertical plane passing through said longitudinal direction of extension (Figure 9).

Advantageously, since in some applications in the melting furnaces the heating means are normally fed with a mixture characterised by a certain scarcity of comburent air (rich flame 24) in order to increase the length of the flame 24 and extend the combustion time, and since, as a result, the fumes which leave the first chamber 6 in a first step are still at the combustion temperature and contain residues of unburnt fuel, in the preferred embodiment the air distributor 65 also comprises at least a fourth chamber 71 for the completion of combustion in which means (not illustrated) for introducing further comburent air may be mounted. In fact, in this way, on one hand unburnt fuel can be eliminated, cutting down the presence of pollutants in the fumes, and on the other hand the heat from combustion can be used for pre-heating.

In the embodiment illustrated in the accompanying drawings, the fourth chamber 71 is substantially positioned centrally relative to the distributor 65, while the third chamber 70 surrounds the top and side of it relative to the longitudinal direction of extension. Moreover, advantageously, only the fourth chamber 71 is in direct fluid communication with the first chamber 6, while the third chamber 70 is in fluid communication with the first chamber 6 only through the fourth chamber 71. In turn, each duct is in fluid communication with the first chamber 6 through the third chamber and the fourth chamber 71.

Finally, it should be noticed that the intermediate part 5 of the furnace is similar in both embodiments illustrated, the only difference being that in the second embodiment its structure is doubled in the longitudinal direction (in fact it has four tubular structures 66 on each side rather than the two in the first embodiment). To prevent cold air from outside from entering the tubular structures 66, each of them is also equipped with a closing lid 72 (for inspections and maintenance work) at the upper part not aligned with the containment body, as illustrated in Figure 9. In contrast, in Figure 1 the lid 72 has been removed to allow a clearer view of the inner structure of the tubular structures 66.

Operation of the furnace 1 derives from the description of the structure above.

In particular, regarding pre-heating of the material 4, in the embodiment illustrated it begins in the upper part 3 of the second chamber 51 with the introduction of the relatively cool fumes (with temperatures that may be around 250 - 300 °C) coming out of the first heat exchanger 35. As the material 4 gradually descends, it is instead struck by the fumes introduced directly into the second chamber 51 through the distributor 65, fumes with much higher temperatures (around 600 °C). Moreover, at least in the stretch between the groove 69 and the first outlets 57 the fumes and the material 4 move with a counter flow, the temperature of the fumes falling towards the first outlets 57 and that of the material 4 increasing towards the infeed section 17.

Advantageously, the time for which the material 4 remains in the second chamber 51 may be around several hours so that pre-heating takes place in the best possible way with the material 4 entering the first chamber 6 with a temperature very close to its melting temperature. Its pre-heating is then completed in the time during which it lies in the stacks 21.

In fact, generally speaking, the temperature of the material 4 may reach 400 - 500 °C in the second chamber 51, 800 - 900 °C in the tubular structures 66 and finally 1200 - 1300 °C in the stacks 21.

As regards air heating, the first heat exchanger 35 can bring the temperature to around 400 - 500 °C. If the second heat exchanger 64 is present, in the usual way, it can be brought as high as 700 - 750 °C with a steel second heat exchanger 64 (such as that illustrated in the accompanying drawings) or even as high as 1200 - 1300 °C with a regenerator as the second exchanger.

This invention also relates to a method for melting solid material 4 in tank 9 melting furnaces, as well as a method for controlling a tank 9 melting furnace 1.

As regards the first method, it is designed to be implemented in tank 9 furnaces in which heat is generated by means of combustion, and comprises first inserting the material 4 in a first melting chamber 6 of the furnace 1, at a loading zone 13, forming two opposite stacks 21 of material which between them delimit a free space 22 and which emerge upwards relative to a furnace 1 molten bath 7.

Then the method comprises making at least part of the fumes from combustion flow and/or extending a flame 24 in the free space 22, in such a way as to gradually melt the material 4 located on the surface of each of the stacks 21 facing the free space 22.

The method preferably comprises inserting the material 4 in the furnace 1 in such a way that the stacks 21 cover, in terms of height, the entire inner height of the first chamber 6, thus minimising heat loss to the outside.

Advantageously, in the preferred embodiment, the stacks 21 are formed in a position which is raised relative to the furnace 1 main molten bath 7, and the material 4 which gradually melts from the stacks 21 is made to run down into the main molten bath 7. In fact, in this way, the material 4 just melted forms a layer with reduced thickness which moves relatively quickly, a factor which facilitates its degassing, especially with reference to any small air bubbles included.

In the preferred embodiment, that melting method is implemented using material 4 in the form of briquettes or crushed material, which may or may not be pre-heated.

In contrast, the method for controlling a tank 9 melting furnace 1 is advantageously applied with furnaces which are equipped with an upper part 3 similar to that described above with reference to this invention.

In fact, said method comprises inserting the material 4 to be melted, in the form of briquettes or crushed material, in a first chamber 6 of the furnace 1, generating heat in the first chamber 6 by means of combustion of a mixture of comburent air and fuel, and pre-heating the material 4, before inserting it in the furnace 1, and the comburent air before their combustion.

According to this invention, as regards the step of pre-heating the comburent air, the method according to the invention comprises implementing it using a first part of the fumes from combustion coming out of the first chamber 6 (in the preferred embodiment that is done by making a first part of the fumes pass along a first path of a first heat exchanger 35 and the air along a second path of the first heat exchanger 35 which is linked to the first path by heat exchange).

In contrast, for the step of pre-heating the material 4, first it is stored in a mound in which it is possible to identify a first portion closer to the first chamber 6 and a second portion which is further from it. When the material 4 is at the second portion of the mound, the pre-heating method comprises heating it by passing through it the first part of the fumes already used to heat the air. Then, when the material 4 has reached the first portion, the method in contrast comprises heating it by passing through it a second part of the fumes from combustion which arrives from the first chamber 6 without having been previously used for any pre-heating.

Advantageously, if a first heat exchanger 35 is used, the method comprises at least partly surrounding the first heat exchanger 35 with the mound of briquettes or crushed material waiting to enter the furnace 1, so as to heat it even using heat dispersed from the first heat exchanger 35.

This invention brings important advantages, with reference to each of the three main parts into which the furnace is divided.

Regarding the lower part, the fact that the material is introduced into the melting chamber by means of two stacks first significantly improves furnace productivity, the plan dimensions being equal, since each stack has a heat exchange surface which extends vertically. Second, since each stack substantially coats a part of the tank perimetric wall, it reduces heat loss to the outside. By using the free space between the stacks for the flame or for the flow of fumes, it is possible to maximum combustion efficiency.

Consequently, even furnace efficiency is improved.

The fact that the material used is in the form of briquettes or crushed material in the stack also means that it is possible to prevent the still solid material from accidentally being conveyed too quickly towards the unloading zone.

That effect is achieved in a further improved way in the embodiment in which the stacks are created on a raised portion of the bottom of the tank. Moreover, in said case, as indicated, there is also a high degassing effect.

Regarding the upper part of the furnace, the main advantage obtained is that of having high level recovery of the heat from the fumes, such that both the material and the air are introduced into the melting chamber at a temperature very close respectively to the melting temperature and the combustion temperature. Consequently, unlike in prior art furnaces, the introduction of new material does not result in significant variations in the entire temperature in the furnace. Indeed, the introduction into the furnace of material which is already at a high temperature, rather than at ambient temperature as occurs in prior art furnaces, allows the inner temperature of the entire chamber to be kept substantially unchanged. Therefore, even the upper part of the furnace contributes to improving efficiency.

Finally, regarding the intermediate part, the simple fact that it was invented allows improved material pre-heating to be guaranteed. In the most complete embodiments, it allows elimination of the presence of unburnt elements in the fumes.

Moreover, in general, thanks to this invention it is possible on one hand to produce large-sized furnaces with improved efficiency, and on the other hand to produce small-sized furnaces with efficiency comparable with that of large-sized prior art furnaces. That can be achieved even without using the regenerators used in prior art plants. Therefore, in this latter case, it is possible to produce industrial plants in which each furnace is connected to a single downstream plant, with the advantageous consequence that, when a downstream plant does not have to be used, it is possible to avoid using the related furnace.

Finally, it should be noticed that this invention is relatively easy to produce and that even the cost linked to implementing the invention is not very high.

The invention described above may be modified and adapted in several ways without thereby departing from the scope of the inventive concept.

Moreover, all details of the invention may be substituted with other technically equivalent elements and the materials used, as well as the shapes and dimensions of the various components, may vary according to requirements.

## Claims

1. A tank furnace for melting material, comprising:
a containment tank (9) for a bath (7) of molten material,
comprising a base (11) and a perimetric wall (12);
an upper vault (10) mounted on top of the containment tank (9), thus together with the containment tank creating a first chamber (6);
means for feeding the material (4) into the tank (9) at a tank loading zone (13), the feed means in turn comprising at least one infeed section (17) for infeed of the material (10) to be melted into the first chamber (6) and at least one magazine for the material (4) to be melted, the magazine being coupled to the infeed section (17);
means for heating using combustion which are associated with the first chamber (6);
and
means for recovering at least part of the fumes produced by combustion, comprising at least one exhauster (33) associated with at least a first flue (26) which is in turn in fluid communication with the first chamber (6);
**characterised in that** the magazine at least partly forms part of the first flue (26), and also being **characterised in that** it also comprises at least one distributor (65) for the air interposed between the first chamber (6) and the magazine for putting them in fluid communication and allowing the passage of the combustion fumes from the first chamber (6) to the magazine without the need for them to pass through the infeed section (17),and **in that** the air distributor (65) also comprises at least a fourth chamber (71) for completion of the combustion where means for introducing comburent air are mounted.

2. The tank furnace according to claim 1, **characterised in that** the distributor (65) is also directly associated with the infeed section (17).

3. The tank furnace according to any of the foregoing claims, **characterised in that** it also comprises a first heat exchanger (35) for pre-heating comburent air or a mixture of comburent air and fuel for supplying the heating means, and also being **characterised in that** the distributor (65) also comprises a third chamber (70) for dividing the fumes which is in fluid communication on one side with the first chamber (6) and on the other side both with the magazine and with the first heat exchanger (35).

4. The tank furnace according to any of the foregoing claims, **characterised in that** it comprises at least two separate infeed sections (17) and also being **characterised in that** the distributor (65) is directly coupled to each of them.

5. The tank furnace according to claims 3 and 4, **characterised in that** the third chamber (70) has a longitudinal direction of extension and also being **characterised in that** the infeed sections (17) are positioned symmetrically relative to a vertical plane passing through the longitudinal direction of extension.

6. The tank furnace according to claim 5, **characterised in that** the fourth chamber (71) is positioned substantially centrally relative to the distributor (65), also being **characterised in that** the third chamber (70) surrounds it at the top and sides relative to the longitudinal direction of extension, and **in that** only the fourth chamber (71) is in direct fluid communication with the first chamber (6), the third chamber (70) being in fluid communication with the first chamber (6) through the fourth chamber (71).

7. The tank furnace according to any of foregoing claims, **characterised in that** the distributor (65) comprises at least one tubular structure (66) its inside forming a first flow channel (67) for the material (4), the bottom of the channel being coupled to the infeed section (17), and comprising at least one canalization extending through the tubular structure (66) from the outside as far as the first channel (67) for receiving part of the fumes from the first chamber (6) and introducing them in the first channel (67).

8. The tank furnace according to claim 7, **characterised in that** the canalization comprises at least a second channel (68) made through the tubular structure (66) from the outside as far as the first channel (67), and a groove (69) connected to the second channel (68), made in the tubular structure (66) at the first channel (67), and at least partly extending around the first channel (67).

9. The tank furnace according to claim 7 or 8, **characterised in that** the distributor (65) comprises a plurality of the tubular structures (66) which are positioned alongside each other for each infeed section (17).

10. The tank furnace according to claims 6 and 7, **characterised in that** the canalization is in fluid communication with the first chamber (6) through the third chamber and the fourth chamber (71).

11. The tank furnace according to any of the foregoing claims, **characterised in that** the magazine comprises a second chamber (51) formed by a containment body (19).
